# FASCICULE DE BREVET EUROPEEN

(11) **EP 2 704 805 B1**
(45) Date de publication et mention de la délivrance du brevet: **01.07.2015**
(21) Numéro de dépôt: 12706628.0
(22) Date de dépôt: 11.01.2012
(51) Int. Cl.: A63F 3/02, A63F 3/00, A63F 13/20

(54) **DISPOSITIF DE RECONNAISSANCE DE GRILLE PICOT SUR ECRAN CAPACITIF**
VORRICHTUNG ZUR ERKENNUNG EINES PORENGITTERS AUF EINEM KAPAZITIVEN SCHIRM
DEVICE FOR RECOGNIZING A PINHOLE LATTICE ON A CAPACITIVE SCREEN

(30) Priorité: 12.01.2011 FR 1100097
(43) Date de publication de la demande: 12.03.2014
(73) Titulaire: Les Editions Volumiques, 92240 Malakoff (FR)
(72) Inventeur: DUPLAT, Bertrand, F-87069 Limoges (FR); MINEUR, Etienne, F-87069 Limoges (FR); HOGNON, Julien, F-87069 Limoges (FR)
(74) Mandataire: Schwalek, Valérie
(86) Numéro de dépôt international: PCT/FR2012/000019
(87) Numéro de publication internationale: WO 2012/095587

(56) Documents cités:
- WO-A2-2006/082547
- US-A1- 2007 062 852
- US-A1- 2009 315 258

## Description

La présente invention concerne un dispositif de reconnaissance d'identité et de positionnement d'une grille picot statique conductive sur écran capacitif. La grille picot s'applique aussi bien sur la semelle d'un pion, sur la face d'une carte, sur la surface d'un objet. Par picot il est entendu aussi bien une surface plane en forme de petite tache, qu'un volume qui est une petite patte.

Il est connu différents dispositifs de reconnaissance sur écran capacitif. Ces dispositifs sont maintenant couramment utilisés sur les écrans de terminaux numériques comme les téléphones mobiles ou les tablettes. Il existe notamment des dispositifs d'affectation de fonction. Ces dispositifs d'affectation de fonction permettent en tapotant l'écran de son doigt de sélectionner des fonctions particulières et ainsi de piloter le terminal. L'écran capacitif devient une interface de commande et d'affectation de tâches. Il existe également des dispositifs de reconnaissance de mouvement sur écran capacitif. Ces dispositifs de reconnaissance de mouvement permettent de modifier la représentation de l'interface, comme par exemple par défilement, agrandissement, réduction, partage, .... L'utilisateur modifie la représentation de l'écran en effectuant des mouvements de ses doigts sur la surface de l'écran.

Ces dispositifs de l'art antérieur sont des dispositifs d'actionnement d'interface pour piloter et animer les fonctions du terminal, téléphoner, écrire, jouer, représenter, ...

I existe pourtant des dispositifs de reconnaissance d'identité d'objet sur écran capacitif qui permettant de reconnaître un objet en le posant sur un écran capacitif, par exemple décrits dans WO2006/082547 ou US2007/062852.

Un objet principal de l'invention est d'utiliser l'écran capacitif comme lecteur pour reconnaître l'identité et le positionnement d'un objet qui est appliqué sur l'écran et de créer une famille d'objets facilement reconnaissables par un logiciel applicatif.

Par position, il est entendu position en coordonnées <X, Y> et position angulaire sur l'écran.

Un objet de l'invention est de proposer un dispositif qui permette de s'adapter facilement à des utilisations particulières de reconnaissance de l'objet. Une application particulière est par exemple que ces objets soient les pions ou les cartes d'un jeu.

Un objet de l'invention est de proposer un dispositif qui soit facilement industrialisable et qui soit économique.

Un objet de l'invention est de proposer un dispositif qui soit stable dans le temps et qui ne soit pas soumis au vieillissement.

Un objet de l'invention est de proposer un dispositif qui permette facilement de partager à plusieurs joueurs un jeu de société. Chaque joueur ayant une figurine, une carte qui lui soit affectée. Le dispositif permettant de reconnaître à la fois, la figurine du joueur, sa position et son orientation.

Un objet de l'invention est d'être facilement adaptable à d'autres applications courantes, comme par exemple du type vie pratique, bureautique, outils commerciaux, outils ludiques, ...

Dans un aspect principal, l'invention propose qu'une partie de l'objet soit conductrice. Cette zone conductrice va de la zone de maintien par la main de l'utilisateur jusqu'à la zone de contact avec l'écran. En appliquant l'objet avec sa main depuis la zone de maintien et en appliquant la zone de signature sur l'écran, l'utilisateur permet donc à la conductivité de son corps de passer depuis la zone de maintien jusqu'à la zone de signature qui est alors appliquée sur l'écran.

Dans un aspect l'invention comporte une disposition particulière des picots de grille de signature qui est compatible avec une programmation logicielle qui interprète cette grille de signature.

Dans un aspect particulier, la programmation du logiciel comporte une première étape statique de reconnaissance, suivie d'une seconde étape dynamique de reconnaissance de grille.

Dans un autre aspect particulier, la première étape statique est supprimée et la grille est reconnue de façon dynamique.

Dans un aspect, la grille comporte une répartition de picot conducteur particulière de façon à pouvoir déterminer plusieurs caractéristiques qui sont
- Identité de la grille de picots
- Position X, Y de la grille de picot sur l'écran
- Orientation angulaire de la grille de picot sur l'écran

Les figures annexées représentent un mode particulier de l'invention sur lesquelles :
- La figure 1 représente l'architecture informatique logiciel qui permet l'identification de la grille de picots
- La figure 2 représente une grille dite à trois points, particulièrement adaptée à des grilles montées en semelle sur des pions
- La figure 3 représente une grille à 9 points, particulièrement adaptée à une grille montée sur une carte.

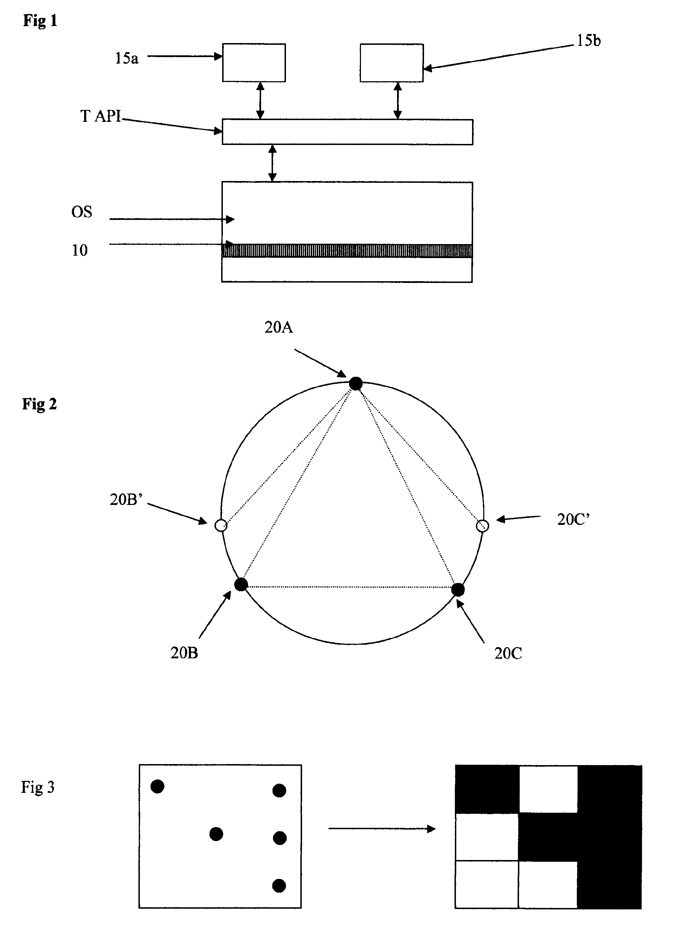

La figure 1 représente l'architecture informatique logiciel qui permet l'identification de la grille de picots. Le terminal comporte un système d'exploitation (OS) qui comporte une couche de traitement des données électroniques provenant de l'écran capacitif, dite couche capacitive (10). Ces données sont transmises à une couche logicielle applicative de traitement du toucher de l'écran, dite (T API). La fonction de cette couche applicative est de traiter les données reçues et de les transcrire sous un format simple sous une forme du type : nuage de point <X, Y>. Une zone de contact étant retranscrite en un intervalle de point X1 < X > X2 et Y1 < Y < Y2. Lorsque l'utilisateur utilise une application de son terminal numérique, l'application détermine alors l'application de traitement spécifique de gestion des contacts écran (15). La présente invention propose une application particulière spécifique (15a) des contacts écran pour grille de picot. L'application des contacts écran pour grille de picot (15a) commence
1. recenser le nombre de points de contact <X, Y> qui sont reconnus.
2. Traiter les points <X, Y> pour savoir si ils obéissent à une règle particulière déterminée
3. Identifier la grille de picot, sa position et son orientation
4. Afficher sur l'écran une information particulière spécifique sous et autour de la grille qui identifie la grille
5. Modifier l'affichage selon les fonctions activées par l'utilisateur au fil du temps et tant que le contact capacitif est actif.

La figure 2 représente une grille dite à trois picots, particulièrement adaptée à des grilles montées en semelle sur des pions. Les pions permettent de jouer. Leur semelle est environ de 3 à 4 cm2. Dans cette configuration, l'invention propose une disposition de picot qui répartit les trois picots (20) sur un cercle. Pour tous les pions, un picot maître (20A) est toujours placé à la même place sur le socle de la figurine. Sa position est remarquable car il est le sommet d'un triangle isocèle. Il est donc facilement reconnu par l'application des contacts écran picot (15a). De fait l'orientation angulaire de la figurine est elle-même automatiquement reconnue puisqu'elle est donnée par la médiane de l'angle au sommet du triangle isocèle en picot maître (20A). L'identité de la figurine est elle donné par la position exacte des deux autres picots (20B, 20C) sur le cercle. Comme représenté en figure 2, une figurine qui aurait des picots disposés autrement suivant le cercle (20b', 20C') aurait une identité différente. La figure 3 représente une grille à 9 picots, particulièrement adaptée à une grille montée sur une carte. Dans cette configuration, l'espace admissible pour la définition d'une grille est supérieur. Si l'application logiciel de reconnaissance (15a) note un nombre de picots compris entre 4 et 9 picots, elle déclenche alors une procédure d'identification qui affecte une grille de 9 cases à la présence des neuf picots.
- Case 1 O /N
- Case 2 O /N
- Case 3 O /N
- Case 4 O /N
- Case 5 O /N
- Case 6 O /N
- Case 7 O /N
- Case 8 O /N
- Case 9 O /N

La définition de l'ensemble des 9 cases est liée à une identité. L'ensemble des identités est défini pour ne pas être redondante et de façon à ce que la rotation à 90 °, 180 °, 270 ° ne permette jamais de retomber sur une identité similaire. Jamais plus de 3 cases vierges ne sont alignées en bord de case. De la sorte la définition d'un ensemble de 9 cases défini un ensemble d'identité unique dont l'identification détermine automatiquement l'identité de la carte et l'orientation de la carte sur l'écran capacitif.

La présente invention concerne donc un dispositif de reconnaissance d'une famille d'objets sur écran capacitif de terminal numérique au moyen d'une application logicielle (15a) des contacts écran pour grille de picot caractérisé en ce qu'une zone de l'objet qui va de la zone de maintien par la main de l'utilisateur jusqu'à la zone de contact avec l'écran est conductrice, la zone de signature comporte une grille de picots conducteurs qui obéit à une règle spécifique de disposition comprise par un logiciel applicatif (15a) des contacts écran pour grille de picot, la règle permet de donner l'identité de la grille de picots, la position X, Y de la grille de picot sur l'écran, l'orientation angulaire de la grille de picot sur l'écran

La présente invention concerne donc un dispositif de reconnaissance d'une famille d'objets à grille de picots sur écran capacitif de terminal numérique caractérisé en ce que la grille comporte trois picots (20) répartis sur un cercle, avec un picot maître (20A) est toujours placé à la même place sur le socle de la figurine, le picot maître (20A) est le sommet d'un triangle isocèle (20A, 20B, 20C).

La présente invention concerne donc un dispositif de reconnaissance d'une famille d'objets à grille de picots sur écran capacitif de terminal numérique caractérisé en ce que si l'application logiciel de reconnaissance (15a) note un nombre de picots compris entre 4 et 9 picots, elle déclenche alors une procédure d'identification qui affecte une grille de 9 cases à la présence des neuf picots, et en ce que l'ensemble de grilles de signature des objets est défini pour ne pas être redondante et de façon à ce que la rotation à 90 °, 180 °, 270 ° ne permette jamais de retomber sur une identité de grille similaire, jamais plus de 3 cases vierges ne sont alignées en bord de case.

La présente invention concerne donc un procédé de reconnaissance d'objet conducteur à signature à semelle à grille de picot sur écran capacitif par la succession d'étape de traitement suivante
- Etape de pose de l'objet sur l'écran avec maintien de l'objet la grille de signature contre l'écran
- Etape de traitement par le logiciel applicatif des points de contact <X, Y> pour savoir si ils obéissent à une règle particulière déterminée
- Etape d'identification par le logiciel applicatif de la grille de picot, sa position et son orientation
- Etape d'affichage par le logiciel applicatif sur l'écran d'une information particulière spécifique sous et autour de la grille qui identifie la grille
- Etape de modification de l'affichage par le logiciel applicatif selon les fonctions activées par l'utilisateur au fil du temps et tant que le contact capacitif est actif.

On voit bien que de nombreuses variantes éventuellement susceptibles de se combiner peuvent ici être apportées sans jamais sortir du cadre de l'invention tel qu'il est défini ci-après.

## Revendications

1. Dispositif de reconnaissance d'une famille de figurines conductrices à signature à semelle à grille de picot sur écran capacitif de terminal dans lequel une zone de la figurine qui va de la zone de maintien par la main de l'utilisateur jusqu'à la semelle zone de contact avec l'écran est conductrice, la figurine comprend sur sa semelle une zone de signature qui comporte une grille de picots conducteurs qui obéit à une règle spécifique de disposition, la règle de disposition est comprise par un logiciel applicatif (15a) du terminal qui gère les contacts écran, la règle de disposition des picots est reconnue par le logiciel applicatif (15a) qui identifie l'identité de la grille de picots, la position X, Y de la grille de picot sur l'écran, l'orientation angulaire de la grille de picot sur l'écran, **caractérisé en ce que** la grille comporte trois picots (20) répartis sur un cercle, le cercle sur lequel les trois picots d'une figurine sont répartis est le même pour toutes les figurines, avec un picot maître (20A) qui est toujours placé à la même place sur la semelle socle de la figurine, le picot maître (20A) est le sommet d'un triangle isocèle (20A, 20B, 20C).

2. Dispositif de reconnaissance d'une famille de figurines à grille de picots sur écran capacitif de terminal numérique selon la revendication 1 **caractérisé en ce que** si le logiciel applicatif (15a) note un nombre de picots compris entre 4 et 9 picots, elle déclenche alors une procédure d'identification qui affecte une grille de 9 cases à la présence des neuf picots, et **en ce que** dans la famille de figurines l'ensemble de grilles de signature des objets n'est pas redondante de façon à ce que la rotation à 90 °, 180 °, 270 ° ne permette jamais de retomber sur une identité de grille similaire, jamais plus de 3 cases vierges ne sont alignées en bord de case.

3. Procédé de reconnaissance de figurines conductrices à signature à semelle à grille de picot sur écran capacitif par un logiciel applicatif d'un terminal au moyen du dispositif selon la revendication 1 **caractérisé en ce qu'**elle comprend la succession d'étape de traitement suivante
• Etape de pose de l'objet sur l'écran avec maintien de la semelle de la grille de signature contre l'écran
• Etape de traitement par le logiciel applicatif des points de contact <X, Y> pour savoir si ils obéissent à une règle particulière déterminée
• Etape d'identification par le logiciel applicatif de la grille de picot, sa position et son orientation
• Etape d'affichage par le logiciel applicatif sur l'écran du terminal d'une information particulière spécifique sous et autour de la grille de picot identifiée
• Etape de modification de l'affichage par le logiciel applicatif selon les fonctions activées par l'utilisateur au fil du temps et tant que le contact capacitif est actif.

## Patentansprüche

1. Vorrichtung zur Erkennung einer Familie von leitenden Figuren mit Signatur mit einer Unterseite mit Noppengitter auf einem kapazitiven Bildschirm eines Terminals, bei der eine Zone der Figur, die von der Haltezone durch die Hand des Benutzers bis zur Unterseite und Kontaktzone mit dem Bildschirm geht, leitend ist, wobei die Figur auf ihrer Unterseite eine Signaturzone umfasst, die ein Gitter von leitenden Noppen umfasst, das einer spezifischen Anordnungsvorschrift gehorcht, wobei die Anordnungsvorschrift von einer Anwendersoftware (15a) des Terminals, die die Bildschirmkontakte steuert, verstanden wird, wobei die Anordnungsvorschrift der Noppen von der Anwendersoftware (15a) verstanden wird, die die Identität des Noppengitters, die X-, Y-Position des Noppengitters auf dem Bildschirm, die Winkelausrichtung des Noppengitters auf dem Bildschirm identifiziert, **dadurch gekennzeichnet, dass** das Gitter drei Noppen (20), die auf einem Kreis verteilt sind, umfasst, wobei der Kreis, auf dem die drei Noppen einer Figur verteilt sind, für alle Figuren derselbe ist, mit einer Hauptnoppe (20A), die immer an derselben Stelle auf der Sockelunterseite der Figur angeordnet ist, wobei die Hauptnoppe (20A) die Spitze eines gleichschenkeligen Dreiecks (20A, 20B, 20C) ist.

2. Vorrichtung zur Erkennung einer Familie von Figuren mit Noppengitter auf einem kapazitiven Bildschirm eines digitalen Terminals nach Anspruch 1, **dadurch gekennzeichnet, dass**, wenn die Anwendersoftware (15a) eine Anzahl von Noppen zwischen 4 und 9 Noppen notiert, in diesem Fall ein Identifikationsverfahren ausgelöst wird, das ein Gitter mit 9 Feldern dem Vorhandensein der neun Noppen zuordnet, und dass in der Familie von Figuren die Gesamtheit von Signaturgittern der Objekte nicht redundant ist, so dass die Drehung um 90°, 180°, 270° niemals ermöglicht, auf eine ähnliche Gitteridentität zurückzufallen, wobei niemals mehr als 3 neue Felder am Feldrand ausgerichtet sind.

3. Verfahren zur Erkennung von leitenden Figuren mit Signatur mit einer Unterseite mit Noppengitter auf einem kapazitiven Bildschirm durch eine Anwendersoftware eines Terminals mit Hilfe der Vorrichtung nach Anspruch 1, **dadurch gekennzeichnet, dass** es die folgende Aufeinanderfolge von Verarbeitungsschritten umfasst:
- Schritt des Stellens des Objekts auf den Bildschirm mit Halten der Unterseite des Signaturgitters gegen den Bildschirm,
- Schritt der Verarbeitung der Kontaktpunkte <X, Y> durch die Anwendersoftware, um zu wissen, ob sie einer bestimmten Sondervorschrift gehorchen,
- Schritt der Identifizierung des Noppengitters, seiner Position und seiner Ausrichtung durch die Anwendersoftware,
- Schritt der Anzeige einer spezifischen Sonderinformation unter dem und um das identifizierte Noppengitter durch die Anwendersoftware auf dem Bildschirm des Terminals,
- Schritt der Änderung der Anzeige durch die Anwendersoftware gemäß den vom Benutzer mit der Zeit aktivierten Funktionen und solange der kapazitive Kontakt aktiv ist.

## Claims

1. Device for recognising a group of conductive signature figurines having a base having a pinhole grid on a capacitive screen of a terminal, in which a region of the figurine which extends from the region in which it is held by the user's hand to the base region of contact with the screen is conductive, the figurine comprises, on its base, a signature region which comprises a grid of conductive pinholes which obeys a specific placement rule, the placement rule is held by application software (15a) of the terminal which manages the screen contacts, the placement rule of the pinholes is recognised by the application software (15a) which identifies the identity of the pinhole grid, the X, Y position of the pinhole grid on the screen and the angular orientation of the pinhole grid on the screen, **characterised in that** the grid comprises three pinholes (20) which are distributed over a circle, the circle over which the three pinholes of a figurine are distributed is the same for all the figurines, with a master pinhole (20A) which is always in the same position on the base of the figurine, the master pinhole (20A) being the apex of an isosceles triangle (20A, 20B, 20C).

2. Device for recognising a group of figurines having a pinhole grid on a capacitive screen of a digital terminal according to claim 1, **characterised in that** if the application software (15a) notes a number of pinholes of between 4 and 9 pinholes, it then triggers an identification procedure which allocates a grid of 9 squares to the presence of the new pinholes, and **in that**, within the group of figurines, the set of signature grids of the objects is not redundant, such that rotation by 90°, 180°, 270° never allows it to fall on an identity having a similar grid, and never more than 3 empty squares are aligned with the edge of the square.

3. Method for recognising conductive signature figurines having a base having a pinhole grid on a capacitive screen using application software of a terminal by means of the device according to claim 1, **characterised in that** it comprises the following succession of processing steps:
- a step of placing the object on the screen, the base of the signature grid being held against the screen;
- a step of processing, using the application software, points of contact <X, Y> in order to ascertain whether they obey a particular predetermined rule;
- a step of identifying, using the application software, the pinhole grid, the position and the orientation thereof;
- a step of displaying, using the application software, a particular specific piece of information under and around the identified pinhole grid on the screen of the terminal; and
- a step of modifying the display, using the application software, according to the functions activated by the user over time and while the capacitive contact is active.
